# EUROPEAN PATENT APPLICATION

(11) **EP 4 783 338 A2**
(43) Date of publication of application: **29.07.2026**
(21) Application number: 26183060.8
(22) Date of filing: 29.03.2024
(51) Int. Cl.: H01M 50/342

(54) **LOWER BATTERY MOUNTING BOX AND BATTERY PACK**

(30) Priority: 31.03.2023 CN 202320713659 U; 31.03.2023 CN 202320713617 U
(62) Divisional of application: 24167880.4
(71) Applicant: Eve Energy Co., Ltd., Huizhou, Guangdong 516006 (CN)
(72) Inventor: Xing, Jianguang, Huizhou, Guangdong, 516006 (CN); Chen, Zhiwei, Huizhou, Guangdong, 516006 (CN); Mao, Qi, Huizhou, Guangdong, 516006 (CN)
(74) Representative: Petraz, Gilberto Luigi

(57) **Abstract**

Disclosed in the present disclosure is a lower battery mounting box and a battery pack. The lower battery mounting box includes: a box, in which an accommodating space for a battery module is formed in the box, and the box is provided with a pressure relief hole; and a beam, provided in the accommodating space, wherein the beam is a sheet metal member and formed by a process of bending or stamping, a pressure relief channel is formed by enclosing between the beam and interior walls of the box, and the accommodating space, the pressure relief channel and the pressure relief hole are sequentially in communication.

## Description

The present application claims priority of Chinese Patent Application No. 2023207136172 filed on March 31, 2023 before CNIPA, and Chinese Patent Application No. 2023207136596 filed on March 31, 2023 before CNIPA. All the above are hereby incorporated by reference in their entirety.

### Field

The present disclosure relates to the technical field of batteries and, particularly, to a lower battery mounting box and a battery pack.

### Background

A power battery module in the related art includes a box, a battery module provided in the box, a beam and a plastic support provided on the box. When the module is molded, the beam supports the plastic support, the plastic support supports the battery, and a pressure relief space is formed between the plastic support and a base plate of the box. The beam is provided with a pressure relief channel. The pressure relief channel is connected to a pressure relief space formed between the plastic support and the base plate, and is connected to a pressure relief opening on the box, so as to release the pressure.

Currently, the beam is often a profile structure, forming a pressure relief channel inside the profile structure, which leads to a larger volume of the beam, occupying a relatively large volume inside the box, which is not conducive to a reasonable utilization of the space inside the box.

### Summary

The present disclosure aims to solve the following technical problem: the beam is large and occupies a relatively large volume inside the box, which is not conducive to a reasonable utilization of the space inside the box.

As a first aspect, provided in the present disclosure is a lower battery mounting box, including: a box, in which an accommodating space for a battery module is formed in the box, and the box is provided with a pressure relief hole; and a beam, provided in the accommodating space, wherein the beam is formed by a process of bending or stamping, a pressure relief channel is formed by enclosing between the beam and interior walls of the box, and the accommodating space, the pressure relief channel and the pressure relief hole are sequentially in communication.

As a second aspect, provided in the present disclosure is a battery pack, including: a battery module; a lower battery mounting box mentioned above; a tray, provided in the accommodating space of the box, provided on the beam, used to support the battery module; and an upper cover, connected to the lower battery mounting box, used to cover the lower battery mounting box.

The beam is formed by a process of bending or stamping, providing the following beneficial effects with respect to the beam of profile: The beam with a simple structure is a sheet metal member, with higher forming efficiency, in which a pressure relief channel is formed by enclosing between the beam and interior walls of the box. Compared to the manner in which the beam itself forms a pressure relief channel, the internal walls of the beam and the box are connected to form a pressure relief channel, which makes full use of the space inside the box, reduces the occupied space inside the box, allows more batteries to be set up, enhances the power supply of the battery pack, also allows the beam to be shaped in different sizes according to the required size of the pressure relief channel, thereby allowing adaptive adjustments and greater adaptability.

### Brief description of the drawings

Fig. 1 is a structural diagram of a view of the battery pack of embodiment of the present disclosure;
Fig. 2 is a structural diagram of another view of the battery pack of Fig. 1;
Fig. 3 is a structural diagram of the battery pack of Fig. 1 without the upper cover and battery modules;
Fig. 4 is a structural diagram of the battery pack of Fig. 1 without the upper cover, battery modules, and the tray;
Fig. 5 is a disassembly diagram of the lower battery mounting box of embodiment of the present disclosure;
Fig. 6 is a top view of the lower battery mounting box of Fig. 5;
Fig. 7 is a sectional view of Fig. 6 taken along line A-A;
Fig. 8 is an enlarged view of Fig. 7 at I;
Fig. 9 is a sectional view of Fig. 6 taken along line B-B;
Fig. 10 is an enlarged view of Fig. 9 at II;
Fig. 11 is a structural diagram of the longitudinal beam of Fig. 5;
Fig. 12 is a structural diagram of the crossbeam of Fig. 5;
Fig. 13 is a structural diagram of the guiding structure of Fig. 5; and
Fig. 14 is a structural diagram of the support structure of Fig. 4.

The meanings of the attached markings are as follows:
100 lower battery mounting box; 10 box; 11 accommodating space; 12 pressure relief hole; 13 frame; 14 base plate; 15 connecting flange; 151 connecting hole; 20 beam; 21 pressure relief channel; 22 longitudinal beam; 221 first communicating opening; 222 first support curved wall; 223 first welded flange; 224 first transition wall; 23 crossbeam; 231 second support curved wall; 232 second welded flange; 233 second transition wall; 234 second communicating opening; 30 guiding structure; 31 lateral wall; 32 top wall; 40 mounting structure; 41 mounting position; 200 battery pack; 50 tray; 60 upper cover; 70 support structure; 71 first support beam; 711 first flange; 72 second support beam; 721 second flange; 73 air avoidance gap.

### Detailed description of the embodiments

The present disclosure is further described below in conjunction with the attached drawings.

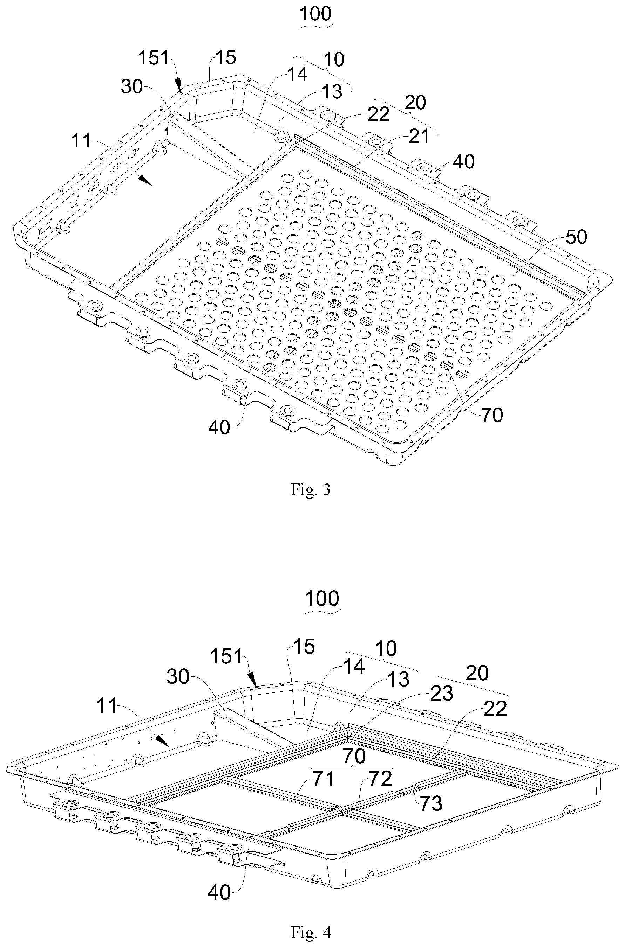

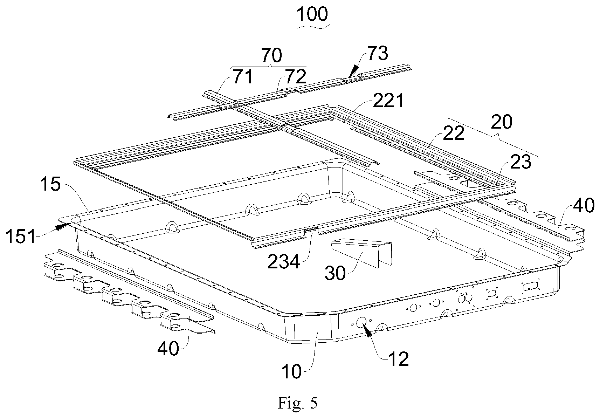

Referring to Figs. 3-14, provided in the first embodiment of the present disclosure is a lower battery mounting box 100, including a box 10 and a beam 20.

Referring to Figs. 3-6, an accommodating space 11 for a battery module is formed in the box 10, and the box 10 is provided with a pressure relief hole 12; and the beam 20 is provided in the accommodating space 11 for supporting a tray 50, in which the beam 20 is formed by a process of bending or stamping, a pressure relief channel 21 is formed by enclosing between the beam 20 and interior walls of the box 10, and the accommodating space 11, the pressure relief channel 21 and the pressure relief hole 12 are sequentially in communication.

By adopting the lower battery mounting box 100 mentioned above, the beam 20 is formed by a process of bending or stamping, providing the following beneficial effects with respect to the beam of profile: The beam 20 with a simple structure is a sheet metal member, with higher forming efficiency, in which a pressure relief channel 21 is formed by enclosing between the beam 20 and interior walls of the box 10. Compared to the manner in which the beam itself forms a pressure relief channel, the internal walls of the beam 20 and the box 10 are connected to form a pressure relief channel 21, which makes full use of the space inside the box 10, reduces the occupied space inside the box 10, allows more batteries to be set up, enhances the power supply of the battery pack, also allows the beam 20 to be shaped in different sizes according to the required size of the pressure relief channel 21, thereby allowing adaptive adjustments and greater adaptability.

In the present implementation, the beam 20 is used to support the tray 50, and the tray 50 is used to support cylindrical batteries.

In the present implementation, the box 10 is formed integrally with the stamping process, which provides a simple forming method of the box 10 and a high forming efficiency compared to the manner in which the box is formed by extrusion molding. The box 10 is formed integrally by the stamping process, which forms a frame 13 and a base plate 14 simultaneously when forming, avoiding a connection step between the frame 13 and the base plate 14 afterwards, providing a higher forming efficiency. Also, no connection seam is between the frame 13 and the base plate 14 since the box 10 is formed integrally, which allows the box 10 to have a higher structural strength.

Specifically, in the present implementation, the box 10 is made of high-strength steel. Compared to the profile box made of aluminum material, the strength of the high-strength steel is three to four times of that of the aluminum, which leads to meeting the structural strength requirements with a relatively low thickness of high-strength steel. For example, the high-strength steel with a thickness of 1.2mm is sufficient, which allows the entire weight of the sheet metal box 10 to be lower than that of the aluminum profile box, so as to achieve a lightweight aim. Additionally, in the present implementation, the box 10 also takes advantage of reducing costs, since the price of the high-strength steel is lower than that of the aluminum.

In the present implementation, the box 10 is applied for the mounting of cylindrical batteries, in which the box 10 is provided with a pressure relief hole 12, and the pressure relief hole 12 is in communication with the accommodating space 11. A pressure relief chamber is formed between the tray 50 and the base plate 14 when the box 10 supports the tray 50, i.e., the accommodating space 11 is divided into two sections by the tray 50, in which the upper section is a mounting space for batteries and the lower section is a pressure relief chamber.

Specifically, the beam 20 serves as an intermediary in communicating the pressure relief chamber to the pressure relief hole 12.

Referring to Figs. 3-6, and 11-12, in the present implementation, the beam 20 includes a longitudinal beam 22 and a crossbeam 23, the pressure relief channels 21 corresponding to the longitudinal beam 22 and the pressure relief channels 21 corresponding to the crossbeam 23 are in communication with each other, the longitudinal beam 22 is provided with a first communicating opening 221 in communication with the accommodating space 11 and the pressure relief channel 21, and the pressure relief channel 21 formed by enclosing between the crossbeam 23 and the box 10 is in communication with the pressure relief hole 12. That is, when the battery requires pressure relief in case of thermal runaway, the pressure flows sequentially through the first connecting opening 221, the pressure relief channel 21 between the longitudinal beam 22 and the box 10, the pressure relief channel 21 between the crossbeam 23 and the box 10, and the pressure relief hole 12, and is finally relieved from the pressure relief hole 12 on the box 10. Also, by adopting the crossbeam 23 to connect the box 10, since the mounting area of the liquid-cooling system, the wiring harness and the Battery Management System (hereinafter referred as BMS) is required to be formed between the crossbeam 23 and the frame 13, the guiding structure 30 connecting the crossbeam 23 and the box 10 is provided in the same mounting area as that of the liquid-cooling system, the wiring harness and the BMS, so that the occupying space of the guiding structure 30 is reasonably compatible with the mounting space of the liquid-cooling system, the wiring harness and the BMS. Compared to the manner of connecting the guiding structure 30 between the longitudinal beam 22 and the box 10, it is in such case necessary to increase the extension width along an extension direction of the crossbeam 23, so as to connect the guiding structure 30 between the crossbeam 23 and the box 10, which is conducive to reasonably narrowing the occupying space of the battery box.

Specifically, in the present implementation, the beam 20 includes two longitudinal beams 22 and two crossbeams 23, in which four of them are enclosed to form a rectangular shape. The crossbeam 23 proximal to the pressure relief hole 12 is in communication with two longitudinal beams 22, and the crossbeam 23 distal to the pressure relief hole 12 is not in communication with the longitudinal beams 22.

It is to be understood that both parallel longitudinal beams 22 are provided with a first communicating opening 221.

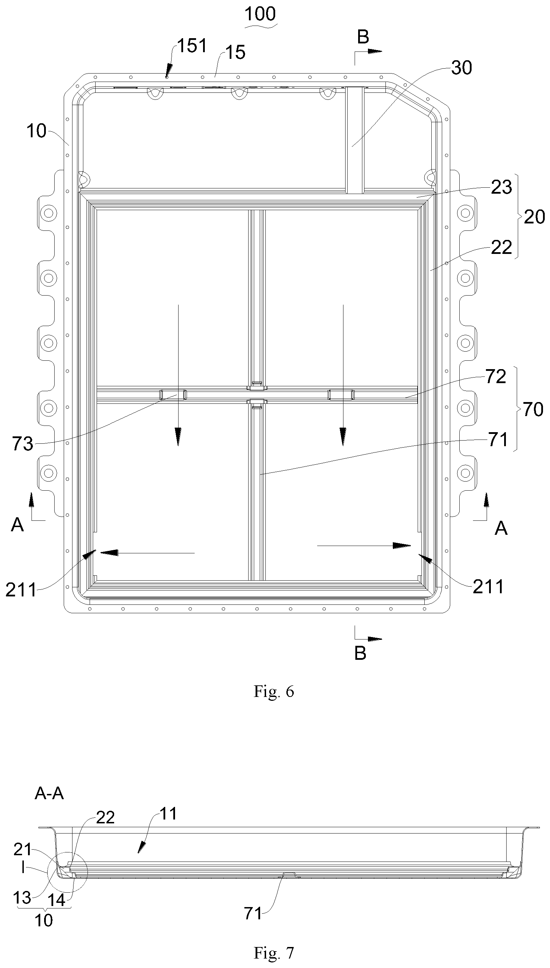

Referring to Figs. 7-12, in an implementation of the present disclosure, the beam 20 is formed by a process of bending or stamping, i.e., both the crossbeam 23 and the longitudinal beam 22 are formed by a process of bending or stamping, which allows the formation of a crossbeam 23 structure and a longitudinal beam 22 structure as required.

Since cylindrical batteries are required to be supported by the tray 50, for facilitating support for the tray 50, in the present implementation, the longitudinal beam 22 is provided with a first support curved wall 222 and the crossbeam 23 is provided with a second support curved wall 231, in which the first support curved wall 222 and the second support curved wall 231 are provided to support the tray 50 collectively, so that the support curved walls support the tray 50 by providing support curved walls on both the longitudinal beam 22 and the crossbeam 23, which allows a certain area for both the crossbeam 23 and the longitudinal beam 22 of steel structure to be in contact with the tray 50. The support area is increased by the support curved walls, which ensures the stability of the support of battery modules by the crossbeam 23 and the longitudinal beam 22. That is, two first support curved walls 222 on two longitudinal beams 22 and two second support curved walls 231 on two crossbeams 23 support the tray 50 collectively when supporting the tray 50.

In the present implementation, the longitudinal beam 22 and the crossbeam 23 have their own mounting means when the beam 20 is connected to the box 10. Specifically, the box 10 includes a frame 13 and a base plate 14 vertically connected thereto, the longitudinal beam 22 is connected to the frame 13 and the base plate 14, and the crossbeam 23 is connected to the base plate 14.

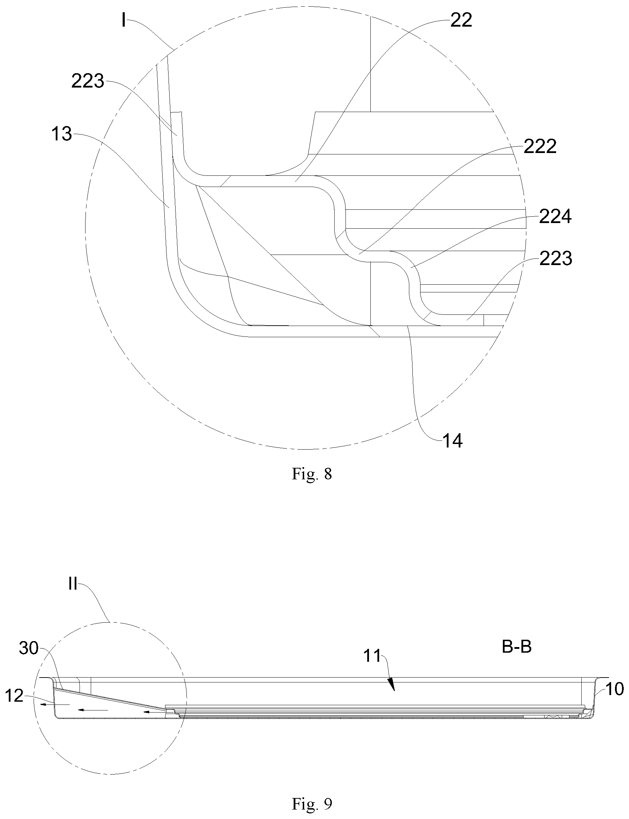

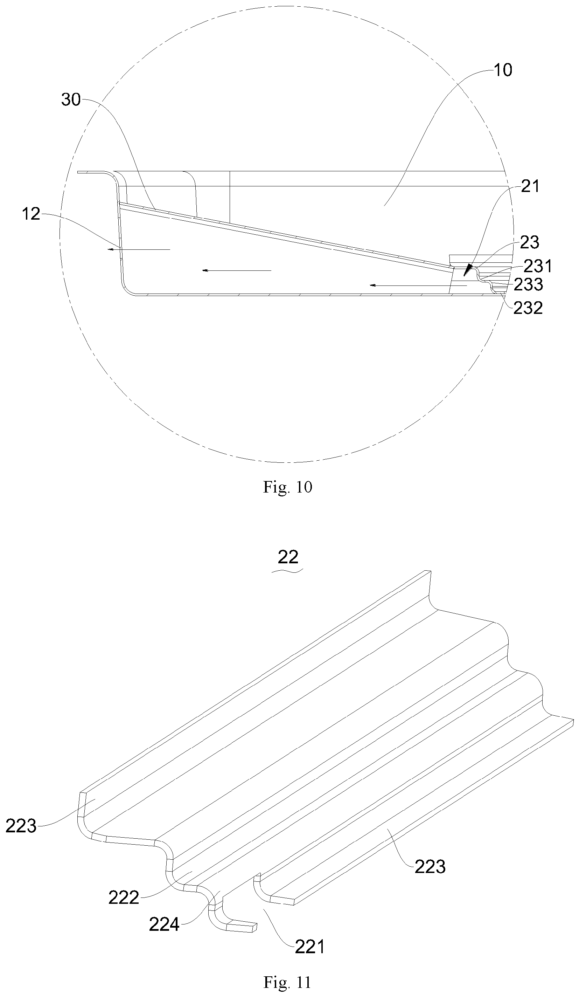

Referring to Figs. 8 and 11, for ensuring the connection stability between the beam 20 and the box 10, the longitudinal beam 22 is provided with two first welded flanges 223 in a width direction of the longitudinal beam 22, the first support curved wall 222 is connected between two first welded flanges 223, one of the first welded flanges 223 is welded to the frame 13, and another of the first welded flanges 223 is welded to the base plate 14, so that a circulation channel for the flow of air, i.e., a pressure relief channel 21, is formed by enclosing between the longitudinal beam 22 and the box 10; and/or the crossbeam 23 is provided with two second welded flanges 232 in a width direction of the crossbeam 23, the second support curved wall 231 is connected between two second welded flanges 232, both second welded flanges 232 are welded to the base plate 14, so that a circulation channel for the flow of air, i.e., a pressure relief channel 21, is formed by enclosing between the crossbeam 23 and the base plate 14.

It is to be understood that, since both the longitudinal beam 22 and the crossbeam 23 are provided with support curved walls and welded flanges, for securing the forming shape of the longitudinal beam 22 and the crossbeam 23, one of the first welded flanges 223 of the longitudinal beam 22 is transitionally connected to the first supporting curved surface wall 222 by means of a first transition wall 224, and at least one of the second welded flanges 232 of the longitudinal beam 22 is transitionally connected to the second supporting curved surface wall 231 by means of a second transition wall 233.

In the present implementation, the first transition wall 224 and the second transition wall 233 are arc-shaped, which are bent in a direction distal to the pressure relief channel 21 so as to be transitionally adapted to the shape of the support curved wall and the welded flange.

Additionally, for ensuring the sealing of both the longitudinal beam 22 and the crossbeam 23 when connected to the box 10, the first welded flange 223 and/or the second welded flange 232 are/is provided with a first sealing adhesive where welded to the box 10. That is, the areas where the longitudinal beam 22 and the crossbeam 23 are welded to the frame 13 and the base plate 14, respectively, are further coated with a first sealing adhesive, so as to further ensure the connection sealing of the longitudinal beam 22 and the crossbeam 23 on the box 10 by means of the first sealing adhesive.

Referring to Figs. 3-8, 9, 10 and 13, in an implementation of the present disclosure, the lower battery mounting box 100 further includes a guiding structure 30 since the beam 20 is required to be in communication with the pressure relief hole 12 on the frame 13. The guiding structure 30 is used to be in communication between the beam 20 and the pressure relief hole 12, i.e., both ends of the guiding structure 30 are in communication between the crossbeam 23 and the pressure relief hole 12, so that the air guided from the longitudinal beam 22 and the crossbeam 23 is directed to the pressure relief hole 12 to release the air through a pressure relief valve provided at the pressure relief hole 12.

It should be understood that, a height of both the longitudinal beam 22 and the crossbeam 23 is required to be lower than that of the frame 13, since the longitudinal beam 22 and the crossbeam 23 are provided within the frame 13. Therefore, when opening the pressure relief hole 12, a setting height of the pressure relief hole 12 is configured to be higher than a height of the connecting channel in order to facilitate the mounting of the pressure relief valve. When setting the guiding structure 30 of the present implementation, an opening size of the guiding structure 30 is gradually increased from the beam 23 to the pressure relief hole 12 so that the opening height of the pressure relief hole 12 may be higher than a height of the pressure relief channel 21 in the beam 20, thereby achieving the effect of directing the air from a low-positioned beam 20 to a high-positioned pressure relief hole 12.

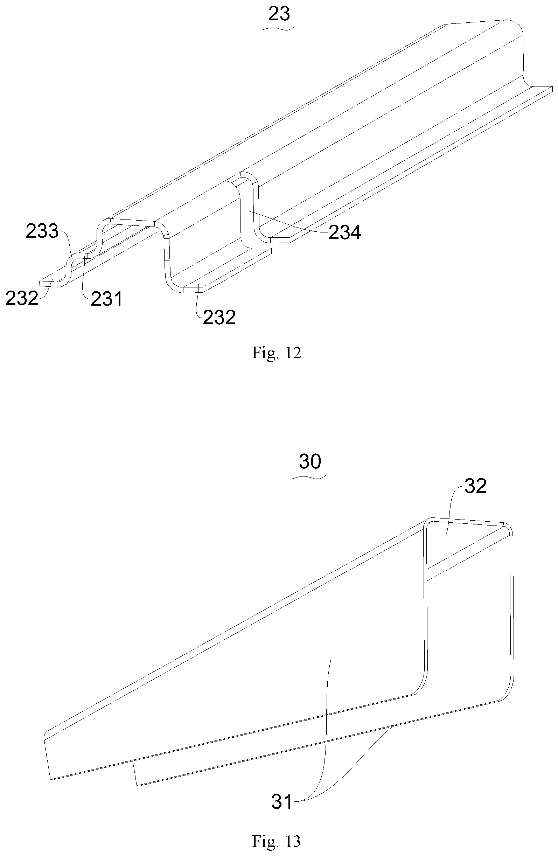

Referring to Fig. 13, in the present implementation, the guiding structure 30 includes two opposite lateral walls 31 and a top wall 32 connected to two lateral walls 31, in which two lateral walls 31 and a top wall 32 form a three-sided communicating structure. End edges of two lateral walls 31 corresponding to a side with an outlet are used to be connected to the frame 13 and in communication with the pressure relief hole 12, end edges of two lateral walls 31 corresponding to a lower connecting opening are used to be connected to the base plate 14, and end edges of two lateral walls 31 corresponding to a side with an inlet are used to be connected to the crossbeam 23, so as to achieve that the guiding structure 30 is enclosed with the frame 13, the base plate 14, and the crossbeam 23 respectively to form a channel for guiding air, and the air is directed to the guiding structure 30 by the pressure relief channel 21 enclosed by the crossbeam 23 in sequence, then is directed to the pressure relief hole 12 by the guiding structure 30, and finally flows out from the pressure relief hole 12. Each end edge of the guiding structure 30 may be welded to the box 10 and the crossbeam 23 when the guiding structure 30 is mounted, respectively, so as to ensure airtightness when the air flows.

Specifically, referring to Fig. 12, in the present implementation, the crossbeam 23 is provided with a second communicating opening 234, in which the second communicating opening 234 is in communication with the guiding structure 30.

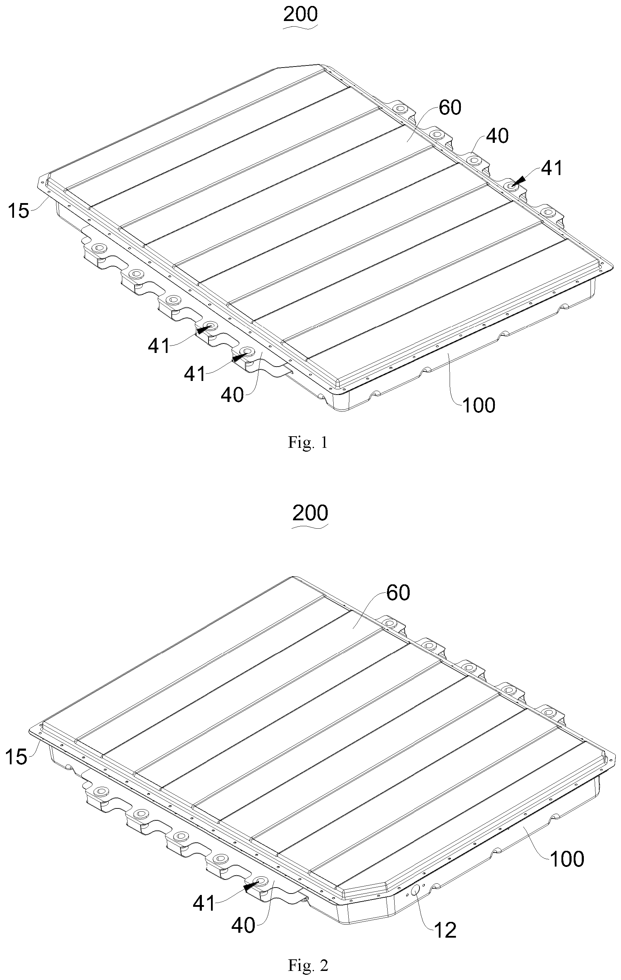

Additionally, referring to Figs. 1-6, in the present implementation, the lower battery mounting box 100 further includes a mounting structure 40, in which the mounting structure 40 is connected to the box 10, and the mounting structure 40 is provided with a plurality of mounting positions 41 spaced apart. That is, in the present implementation, the mounting structure 40 is formed integrally, and a plurality of mounting positions 41 is provided on the integrally formed mounting structure 40, so that it is sufficient to weld only one mounting structure 40 to the box 10 when mounting the mounting structure 40 to the box 10, which not only improves the forming efficiency of the mounting structure 40, but also improves the connecting efficiency of the mounting structure 40 and the box 10.

Referring to Figs. 4-6, and 14, for ensuring the support stability of the tray 50 and the support strength of the box 10, the lower battery mounting box 100 further includes a support structure 70, in which the support structure 70 is provided in the accommodating space 11, and the first support curved wall 222 and the second support curved wall 231 are provided to support the tray 50 collectively. A support structure 70 is provided in the box to support the tray 50, so as to enhance the support strength of the base plate 14 of the box 10, which avoids collapsing the base plate 14 after mounting the battery module on the tray 50.

The support structure 70 is provided with an air avoidance gap 73 for flowing air. The air avoidance gap 73 is provided to allow the pressure to flow through the air avoidance gap 73 to flow into the first connecting opening 221 of the longitudinal beam 22 when the cylindrical battery is relieved to a lower side of the tray 50, avoiding that the support structure 70 affects the flow of air in the space formed between the tray 50 and the base plate 14, after the support for the tray 50 is provided.

Further, in the present implementation, the air avoidance gap 73 is formed by recessing a part of the support structure 70 towards the base plate 14 of the box 10, which facilitates the formation of the avoidance gap. That is, the air avoidance gap 73 is formed simultaneously when forming the support structure 70. In other implementations, a through-hole may be provided on the support structure 70 in a length direction of the longitudinal beam 22, which may also achieve the flow of air by the through-hole.

Specifically, two longitudinal beams 22 and two crossbeams 23 are provided in the present implementation, in which four of them are enclosed to form a rectangular shape, and the support structure 70 is provided in the structure with the rectangular shape. Corresponding to the structure of the beam 20, with the box 10 forming integrally by a stamping process, the box 10 may suffer from insufficient load bearing strength. Therefore, in the present implementation, the support structure 70 is in a shape of a cross, positioned in the enclosing space enclosed by the longitudinal beam 22 and the crossbeam 23, i.e., positioned in the structure with the rectangular shape. The beam 20 and the support structure 70 are combined to form a structure with four rectangular shapes, i.e., the support structure 70 is in contact with both the longitudinal beam 23 and the crossbeam 22, which ensures the structural strength of the base plate 14 collectively, avoiding collapse. In such a setup, the load bearing problem of the base plate 14 is solved.

Specifically, in the present implementation, the support structure 70 includes a first support beam 71 and a second support beam 72 provided in intersection, the first support beam 71 is in parallel to the longitudinal beam 22, the second support beam 72 is in parallel to the crossbeam 23, and the first support beam 71 and/or the second support beam 72 are/is provided with the air avoidance gap 73, so as to provide the air avoidance gap 73 on the first support beam 71 and/or the second support beam 72, avoiding that the support structure 70 affects the flow of air in the space formed between the tray 50 and the base plate 14, after the support for the tray 50 is provided.

Specifically, in the present implementation, the air avoidance gap 73 is provided on the second support beam 72, in which the air flows through the air avoidance gap 73 on the second support beam 72. The air is directed into the first connecting opening 221 of the longitudinal beam 22 due to the guiding effect of the longitudinal beam 22 and the first support beam 71 parallel to the longitudinal beam 41, i.e., it is conducive to the smooth flow of the air in a direction towards the longitudinal beam 22, and to enhancing the efficiency of the pressure relief. Specifically, in the present implementation, refer to Fig. 6 for a diagram of the airflow within the box 10. With the guiding effect of the longitudinal beam 22 and the first support beam 71, the air flows through the air avoidance gap 73 to the first connecting opening 221 of the longitudinal beam 22, flows through the pressure relief channel 21 formed by the longitudinal beam 22 and an interior wall of the box 10, flows to the crossbeam 23 and the interior wall of the box 10 to form the pressure relief channel 21, then flows through the second connecting opening 234 on the crossbeam 23 to the guiding structure 30, and is finally relieved by the pressure relief holes 12 in communication with the guiding structure 30 on the box 10.

In the present implementation, the first support beam 71 and the second support beam 72 are connected by a lap joint when setting the support structure 70 with the shape of a cross. That is, one reinforcing beam laps over another reinforcing beam. For example, the first support beam 71 may lap over the second support beam 72 or the second support beam 72 may lap over the first support beam 71, which may both achieve the effect of overlapping connection.

Specifically, in the present implementation, the second support beam 72 laps over the first support beam 71. In such a setup, in the present implementation, the first support beam 71 and the second support beam 72 are in overlapping connection, which avoids connecting the process of connecting them, e.g., the process of welding them together, which improves the mounting efficiency of the support structure 70.

It should be noted that, in the present implementation, corresponding to that two longitudinal beams 22 are in communication with one crossbeam 23, the second support beam 72 is provided with two air avoidance gaps 73, and two air avoidance gaps 73 are provided spaced apart with the first support beam 71 as a separating beam. In other implementations, more air avoidance gaps 73 may be provided on each side of the first support beam 71, e.g., two or more, which is not limited hereby.

In the present implementation, both the first support beam 71 and the second support beam 72 are welded to the base plate 14 when mounting the support structure 70, so as to ensure the strength of connection between each of the first support beam 71 and the second support beam 72 to the base plate 14. Also, the integrity of the base plate 14 is ensured by the connection between each of the first support beam 71 and the second support beam 72 with the base plate 14, as compared to a rivet or bolt connection.

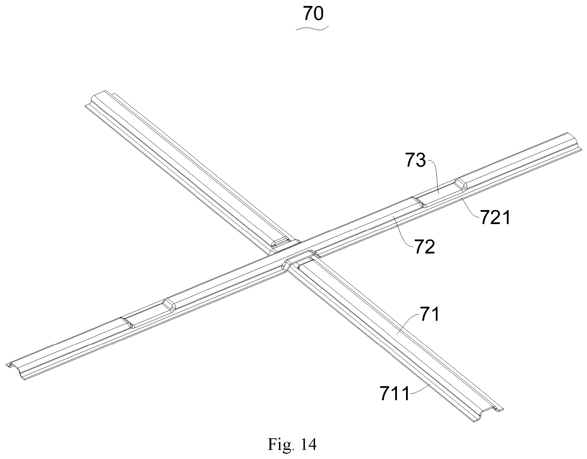

Specifically, referring to Fig. 14, when welding each of the first support beam 71 and the second support beam 72 to the base plate 14, the first support beam 71 is provided with a first flange 711 in parallel to the base plate 14, in which the first flange 711 is used to be in welded connection with the base plate 14, and the second support beam 72 is provided with a second flange 721 in parallel to the base plate 14, in which the second flange 721 is used to be in welded connection with the base plate 14, so that the connection area is increased when welding each of the first support beam 71 and the second support beam 72 to the base plate 14 by providing the first flange 711 and the second flange 721, which ensures the welded strength of both the first support beam 71 and the second support beam 72 to the base plate 14.

Referring to Fig. 1 and Fig. 2, provided in the second embodiment of the present disclosure is a battery pack 200, including a battery module (not shown in figures), a tray 50, an upper cover 60, and a lower battery mounting box 100 mentioned above.

The lower battery mounting box 100 is used to mount the battery module (not shown in figures). The tray 50 is provided in the accommodating space 11 of the battery box, provided on the beam 20, used to support the battery module. The upper cover 60 is connected to the lower battery mounting box 100 for covering the lower battery mounting box 100.

Further, for ensuring the sealing of the upper and lower areas of the tray 50 after the battery module is placed on the tray 50, for ensuring the operational security of the battery, the battery pack 200 further includes a second sealing adhesive after the tray 50 is provided on the longitudinal beam 22 and the crossbeam 23. The second sealing adhesive is filled with a bottom of the battery module and is supported by the tray 50, i.e., the second sealing adhesive fills the gap between the tray 50 and the battery module and extends to the overlapping connection of the tray 50 to the crossbeam 23 and the longitudinal beam 22. The second sealing adhesive is provided to ensure the sealing of the upper and lower areas of the tray 50 after the battery module is placed on the tray 50, which divides the accommodating space 11 within the box 10 into an upper area and a lower area. The air flows below the tray 50 and avoids flowing upwards when the battery module is relieving pressure, so as to form a separate pressure relief channel and achieve the effect of separation of heat and electricity, which ensures the safety of the battery use. Also, the second sealing adhesive combines the battery module and the tray 50 into a single unit, which allows the battery module and the tray 50 to provide greater structural strength.

Further, referring to Figs. 1-6, the battery pack 200 further includes an upper cover 60, since the box 10 of the present implementation is formed by stamping. For facilitating the mounting between the box 10 and the upper cover 60, an upper edge of the box 10 is formed with a connecting flange 15 in a peripheral direction away from a center of the box 10, the connecting flange 15 is extended in a direction perpendicular to a height direction of the box 10, and the upper cover 60 is connected to the connecting flange 15 to cover the box 10. An upper edge of the box 10 is formed with a connecting flange 15 in a peripheral direction, which facilitates the connection between the box 10 and the upper cover 60, ensuring the connection sealing between the upper cover 60 and the box 10, thereby sealing the battery modules inside the lower battery mounting box 100.

Specifically, in the present implementation, the connecting flange 15 is provided with a plurality of connecting holes 151 through which the box 10 is in bolted connection with the upper cover 60, which achieves the sealing between the upper cover 60 and the box 10.

## Claims

1. A lower battery mounting box (100), comprising:
a box (10), wherein an accommodating space (11) for a battery module is formed in the box (10); and
a beam (20), wherein the beam (20) is provided in the accommodating space (11) and comprises a longitudinal beam (22) and a crossbeam (23), wherein the longitudinal beam (22) is provided with a first support curved wall (222), the crossbeam (23) is provided with a second support curved wall (231), and the first support curved wall (222) and the second support curved wall (231) are arranged to support the battery module collectively.

2. The lower battery mounting box (100) according to claim 1, wherein
both the longitudinal beam (22) and the crossbeam (23) are in welded connection with the box (10); and/or
the box (10) comprises a frame (13) and a base plate (14) vertically connected thereto, the longitudinal beam (22) is provided with two first welded flanges (223) in a width direction of the longitudinal beam (22), the first support curved wall (222) is connected between two first welded flanges (223), one of the first welded flanges (223) is welded to the frame (13), and another of the first welded flanges (223) is welded to the base plate (14) and is connected to the first support curved wall (222) with a first transition wall (224); and/or
the crossbeam (23) is provided with two second welded flanges (232) in a width direction of the crossbeam (23), the second support curved wall (231) is connected between two second welded flanges (232), both two second welded flanges (232) are in welded connection with the base plate (14), and at least one of the second welded flanges (232) is connected to the second support curved wall (231) with a second transition wall (233); and/or
the first welded flange (223) and/or the second welded flange (232) are/is provided with a first sealing adhesive where the first welded flange (223) and/or the second welded flange (232) are/is welded to the box (10).

3. The lower battery mounting box (100) according to claim 1 or claim 2, wherein the box (10) is provided with a pressure relief hole (12), a pressure relief channel (21) is formed by enclosing between the beam (20) and interior walls of the box (10), and the accommodating space (11), the pressure relief channel (21) and the pressure relief hole (12) are sequentially in communication;
wherein the lower battery mounting box (100) further comprises a guiding structure (30), and both ends of the guiding structure (30) are in communication between the pressure relief hole (12) and the pressure relief channel (21) of the beam (20); and
wherein an opening size of the guiding structure (30) is gradually increased from the beam (20) to the pressure relief hole (12), so that a setting height of the pressure relief hole (12) is higher than a height of the pressure relief channel (21) of the beam (20).

4. The lower battery mounting box (100) according to any one of claims 1 to 3, further comprising a support structure (70), wherein the support structure (70) is provided in the accommodating space (11), and the support structure (70), the first support curved wall (222), and the second support curved wall (231) are arranged to support the battery module collectively.

5. The lower battery mounting box (100) according to claim 4, wherein the support structure is in a shape of a cross; and/or
wherein the beam (20) and the support structure (70) are combined to form a structure with four rectangular shapes.

6. The lower battery mounting box (100) according to any one of claims 4 to 5, wherein the support structure (70) is provided with an air avoidance gap (73) for flowing air; wherein the air avoidance gap (73) is formed by recessing a part of the support structure (70) towards a base plate (14) of the box (10).

7. The lower battery mounting box (100) according to claim 6, wherein the support structure (70) comprises a first support beam (71) and a second support beam (72) provided in intersection, wherein the first support beam (71) and/or the second support beam (72) are/is provided with the air avoidance gap (73).

8. The lower battery mounting box (100) according to claim 7, wherein the first support beam (71) is in parallel to the longitudinal beam (22), and the second support beam (72) is in parallel to the crossbeam (23); and/or
wherein the first support beam (71) and the second support beam (72) are connected by a lap joint.

9. The lower battery mounting box (100) according to any one of claims 7 to 8, wherein the second support beam (72) is provided with at least two air avoidance gaps (73), and the at least two air avoidance gaps (73) are provided spaced apart with the first support beam (71) as a separating beam.

10. The lower battery mounting box (100) according to any one of claims 7 to 9, wherein both the first support beam (71) and the second support beam (72) are in welded connection with a base plate (14) of the box (10).

11. The lower battery mounting box (100) according to claim 10, wherein the first support beam (71) is provided with a first flange (711) in parallel to the base plate (14), and the first flange (711) is used to be in welded connection with the base plate (14); the second support beam (72) is provided with a second flange (721) in parallel to the base plate (14), and the second flange (721) is used to be in welded connection with the base plate (14).

12. The lower battery mounting box (100) according to any one of claims 1 to 11, wherein the lower battery mounting box (100) comprises a mounting structure (40), the mounting structure (40) is connected to an exterior side of the box (10), and the mounting structure (40) is provided with a plurality of mounting positions (41) spaced apart.

13. A battery pack (200), comprising:
a battery module;
the lower battery mounting box (100) of any one of claims 1 to 12; and
an upper cover (60), wherein the upper cover (60) is connected to the lower battery mounting box (100) and covers the lower battery mounting box (100).

14. The battery pack (200) according to claim 13, wherein the battery pack (200) further comprises a tray (50) and a second sealing adhesive, wherein the second sealing adhesive is filled with a bottom of the battery module and is supported by the tray (50); and the first support curved wall (222) and the second support curved wall (231) are arranged to support the tray (50) collectively.

15. The battery pack (200) according to claim 13 or claim 14, wherein an upper edge of the box (10) is formed with a connecting flange (15) in a peripheral direction away from a center of the box (10), the connecting flange (15) is extended in a direction perpendicular to a height direction of the box (10), and the upper cover (60) is connected to the connecting flange (15) to cover the box (10).
